**Europäisches Patentamt**

**European Patent Office**

**Office européen des brevets**

(19)

(11) Veröffentlichungsnummer: **0 142 453**
**B1**

(12)

# EUROPÄISCHE PATENTSCHRIFT

(45) Veröffentlichungstag der Patentschrift:
18.05.88

(51) Int. Cl.⁴: **A 01 D 34/40**

(21) Anmeldenummer: **84440040.8**

(22) Anmeldetag: **20.09.84**

(54) Steuereinrichtung für einen Rasenmäher.

(30) Priorität: **21.09.83 FR 8315276**

(43) Veröffentlichungstag der Anmeldung:
**22.05.85 Patentblatt 85/21**

(45) Bekanntmachung des Hinweises auf die Patenterteilung:
**18.05.88 Patentblatt 88/20**

(84) Benannte Vertragsstaaten:
**AT BE CH DE IT LI NL SE**

(56) Entgegenhaltungen:
**FR-A-2 359 686**
**GB-A-2 060 539**
**US-A-2 265 545**
**US-A-3 423 103**
**US-A-3 694 855**

(73) Patentinhaber: **Outils Wolf, Société à responsabilité limitée, Rue de l'Industrie, F-67160 Wissembourg (FR)**

(72) Erfinder: **Der Erfinder hat auf seine Nennung verzichtet**

(74) Vertreter: **Nuss, Pierre, 10, rue Jacques Kablé, F-67000 Strasbourg (FR)**

LIBER, STOCKHOLM 1988

EP 0 142 453 B1

## Beschreibung

Steuereinrichtung für einen Rasenmäher

Die vorliegende Erfindung bezieht sich auf den Bereich der Bauweise von Rasenmähern, insbesondere von Sichelrasenmähern mit sich um eine senkrechte Achse drehenden Messern und betrifft Steuerelemente für einen derartigen Rasenmäher.

Im allgemeinen bestehen solche Rasenmäher aus einem das Wirkungsfeld des Messers ummantelnden Gehäuse, das das geschnittene Gras durch einen Auswurfkanal aus dem Gehäuse in einen Sammelbehälter oder zu Schwaden führt, aus einem Antriebsmotor des Messers, aus einer Lenkstange, die ein oder mehrere Steuerorgane des Motors und/oder der Antriebseinrichtung des Rasenmähers aufnehmen kann, und aus einem Sammelbehälter für das geschnittene Gras, der hinter oder neben dem Gehäuse angeordnet ist.

Bei solchen Rasenmähern ist gewöhnlich die Lenkstange auf dem Gehäuse entweder direkt mit Schrauben, mit oder ohne Mutter, oder mittels einer Zusatzeinrichtung, die das Kippen der Lenkstange ermöglicht, fixiert und besteht in den meisten Fällen aus zwei durch ein Gelenk miteinander verbundenen Elementen, ein Gelenk, das in Arbeitsstellung blockiert ist und in Ruhestellung das Klappen der Lenkstange ermöglicht vgl. US-A-3 423 103, US-A-3 694 855, US-A-2 265 545. Allerdings wird die Lenkstange nur zum Teil geklappt und somit wird wenig Platz für Transport und Lagerung gespart, wenn die Lenkstange vom Gehäuse nicht abgenommen wird.

Darüber hinaus sind die, durch US-A-3 423 103, US-A-3 694 855 und US-A-2 265 545 bekannte Lenkstangen nicht schnell abnehmbar, bzw. montierbar.

Ausserdem sind im allgemeinen auf der Lenkstange ein oder mehrere Steuerorgane angeordnet, und zwar die des Motors, und eventuell die der Antriebsräder; diese Organe, die mit Schellen oder Schrauben befestigt sind, müssen demontiert werden, was viel Zeit in Anspruch nimmt und langwierig ist, wobei man das Risiko eingeht, bei jeder Demontage der Lenkstange Teile zu verlieren.

Durch GB-A-2 060 539 ist zwar ein die Steuerorgane tragender Arm bekannt, der schwenkbar an einer, mitells Schellen an einer Lenkstange befestigten Stange, angeordnet ist. Diese Schellen sind aber nicht zum schnellen Abnehmen oder Montieren der Stange vorgesehen, insbesondere im Zusammenhang mit einem Abnehmen der Lenkstange.

Der Zweck dieser Erfindung ist, diese Nachteile zu beseitigen.

In der Tat bezieht sie sich auf eine Steuereinrichtung für Sichelrasenmäher, der aus einem Gehäuse, das das Wirkungsfeld des Messers umhüllt und das das geschnittene Gras durch einen Auswurfkanal zu einem Sammelbehälter oder Korb führt, aus einem Antriebsmotor des Messers und aus Steuerorganen besteht, die ihrerseits aus einer Lenkstange des Rasenmähers und aus einem Steuerorgan des Motors und/oder einer Antriebseinrichtung des Rasenmähers bestehen, dadurch gekennzeichnet, dass die Lenkstange in ihrem unteren Teil mit einer Montage und Schnellsperreinrichtung versehen ist, die aus zwei Flügeln aus Profilelementen mit keilförmigem Querschnitt besteht, die auf Gleitschienen arbeiten, deren Innenquerschnitt dem Aussenquerschnitt der Flügel entspricht, wobei diese Gleitschienen mit dem Gehäuse verbunden sind, und an ihrem freien Ende einen vom Gehäuse nach oben gerichteten offenen Schlitz zur Aufnahme einer Achse eines exzentrischen Sperrorganes aufweisen, wobei die Schnellsperreinrichtung eine schnelle Montage und Demontage der Lenkstange ermöglicht.

Entsprechend einem Merkmal der Erfindung sind die Organe der Motorsteuerung und/oder der Antriebseinrichtung des Rasenmähers je in einem abnehmbaren Gehäuse mit Befestigungsringen, die sich durch elastische Verformung verhaken, oder mit Clips und mit einem Zapfen oder einem anderen Ansatz, der mit einem entsprechenden geformten Loch in der Lenkstange zusammenkommt, um das Gehäuse bei der Montage zu justieren.

Die folgende Beschreibung wird zum besseren Verständnis der Erfindung beitragen. Sie bezieht sich auf eine bevorzugte Ausführungsart der Erfindung, die als nicht einschränkendes Beispiel gegeben wird, das anhand der beigefügten Schemazeichnungen erläutert ist, in denen:

Figur 1 eine Perspektivzeichnung eines Rasenmähers mit erfindungsgemässen Einrichtungen, ist,

Figur 2 eine Teilperspektivzeichnung des unteren Teils der Lenkstange mit ihrem sperrorgan und,

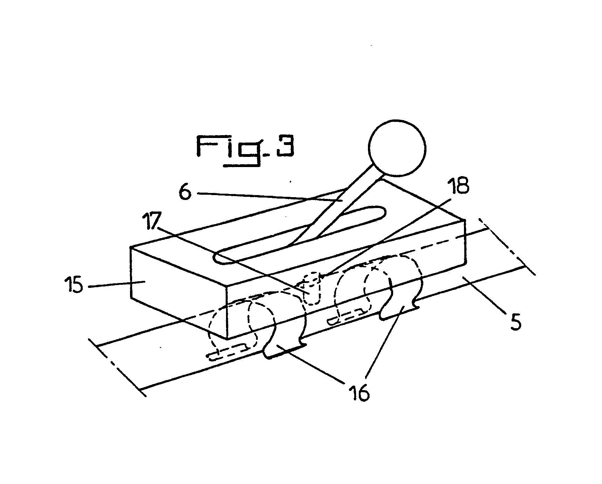

Figur 3 eine Perspektivzeichnung ist, die die Befestigung eines Steuerorgangehäuses zeigt.

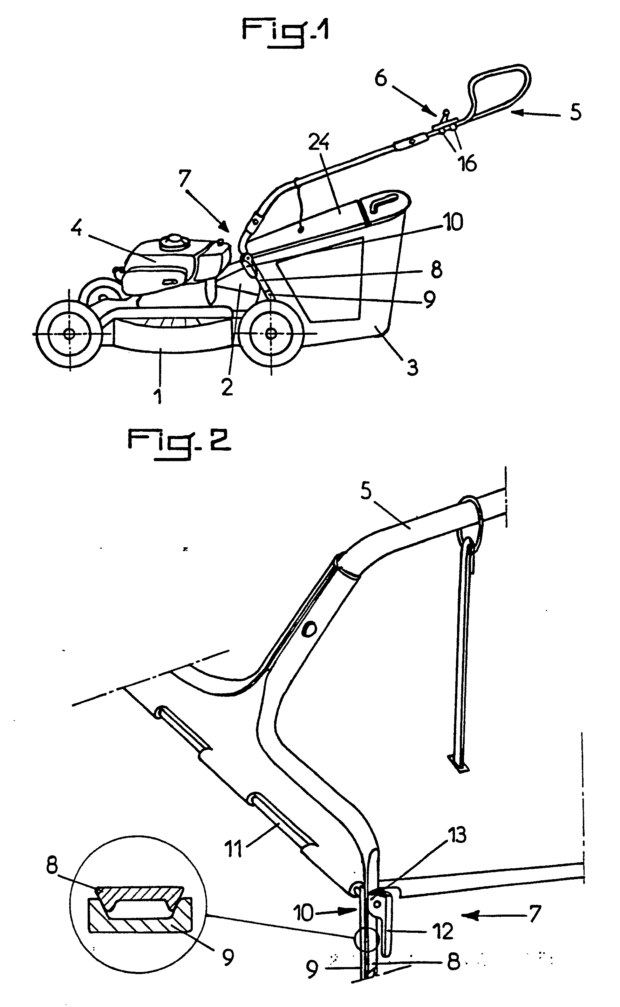

Figur 1 der beigefügten Zeichnungen stellt einen Sichelrasenmäher dar, bestehend aus einem Gehäuse 1, das das Wirkungsfeld des Messers umhüllt und das geschnittene Gras durch einen Auswurfkanal 2 zu einem Sammelbehälter oder Korb 3 führt, aus einem Antriebsmotor 4 des Messers und aus Steuereinrichtungen, bestehend aus einer Lenkstange 5 des Rasenmähers und einem Steuerorgan 6 des Motors 4 oder einer Antriebseinrichtung des Rasenmähers.

Erfindungsgemäss weist die Lenkstange an ihrem unteren Teil eine Montage- und Schnellsperreinrichtung 7 auf, bestehend aus zwei aus Prolilelementen geformten Flügeln 8 mit keilförmigem Querschnitt, die mit Gleitschienen 9 arbeiten, deren Innenquerschnitt dem Aussenquerschnitt der Flügel entspricht, wobei diese Gleitschienen 9 mit dem Gehäuse 1 verbunden sind und an ihrem freien Ende einen vom Gehäuse 1 nach oben gerichteten offenen Schlitz zur Aufnahme einer Achse 11 eines exzentrischen Sperrorganes 10 aufweist.

Dieses Organ 10 kann vorteilhaft (Figur 2) die Form einer Achse 11 aufweisen, die durch die Flügel 8 geht und die an einem ihrer Enden mit einem Hebel oder einem drehbaren Griff 12 versehen ist, der einen Nocken 13 aufweist, der in Sperrstellung auf den Flügel 8 drückt, welcher der Lenkstange entspricht, wobei das andere Ende der Achse 11 mit einem Gewinde versehen ist, das mit einer Mutter zur Regelung der Sperrkraft verbunden ist und dabei gleichzeitig den anderen Flügel 8 blockiert. Um die Lenkstange 5 auf dem Gehäuse 11 zu montieren, genügt es die Flügel 8 in die Gleitschienen 9 einzuschieben und diese Flügel 8 in den Gleitschienen 9 mit dem Organ 10, nach Aufnahme seiner Achse 11 in den Schlitzen der Gleitschienen 9 zu blockieren.

Das Steuerorgan 6 des Motors 4 oder einer Antriebseinrichtung des Ra einem abnehmbaren Gehäuse 15 montiert, das mit Befestigungsringen 16, die sich durch elastische Verformung verhaken oder mit Clips und mit einem Zapfen 17 oder einem ähnlichen Ansatz, versehen ist, der mit einem auf der Lenkstange 5 vorgesehenen Loch 18 von entsprechendem Durchmesser zusammenkommt. Somit können eine korrekte Positionierung und Befestigung des Gehäuses 15 gewährleistet werden, wobei eine schnelle Demontage des genannten Gehäuses 15 möglich ist.

**Patentansprüche**

1. Steuerungseinrichtung für Sichelrasenmäher, der aus einem Gehäuse (1), das das Wirkungsfeld des Messers umhüllt und das das geschnittene Gras durch einen Auswurfkanal (2) zu einem Sammelbehälter oder Korb (3) führt, aus einem Antriebsmotor (4) des Messers und aus Steuerorganen besteht, die ihrerseits aus einer Lenkstange (5) zum Lenken des Rasenmähers und aus einem Steuerorgan (6) des Motors (4) oder einer Antriebseinrichtung des Rasenmähers bestehen, dadurch gekennzeichnet, dass die Lenkstange (5) in ihrem unteren Teil mit einer Montage- und Schnellsperreinrichtung (7) versehen ist, die aus zwei Flügeln (8) aus Profilelementen mit keilförmigem Querschnitt besteht, die auf Gleitschienen (9) arbeiten, deren Innenquerschnitt dem Aussenquerschnitt der Flügel (8) entspricht, wobei diese Gleitschienen mit dem Gehäuse (1) verbunden sind, und an ihrem freien Ende einen vom Gehäuse (1) nach oben gerichteten offenen Schlitz zur Aufnahme einer Achse (11) eines exzentrischen Sperrorganes (10) aufweisen,wobei die Schnellsperreinrichtung (7) eine schnelle Montage und Demontage der Lenkstange (5) ermöglicht.

2. Einrichtung nach Anspruch 1, dadurch gekennzeichnet, dass das Organ (10) vorteilhaft die Form einer Achse (11) haben kann, die durch die Flügel (8) geht und die an einem Ende mit einem Hebel oder einem drehbaren Griff (12) versehen ist, der einen Hocken (13) aufweist, der in Sperrstellung auf einem der Flügel (8) drückt, der der Lenkstange (5) entspricht, und das andere Ende der Achse (11) ein Gewinde aufweist, das mit einer Mutter zur Regelung der Sperrkraft verbunden ist und dabei gleichzeitig die Blockierung des gegenüberliegenden Flügels (8) gewährleistet.

3. Einrichtung nach Anspruch 1, dadurch gekennzeichnet, dass die Steuerorgane (6) des Motors (4) und/oder der Antriebseinrichtung des Rasenmähers je in einem abnehmbaren Gehäuse (15) montiert sind, das Befestigungsringe (16), die sie durch elastische Verformung verhaken, oder Clips und eine Zapfen (17) oder einen anderen Ansatz aufweist, der bei der Befestigung, zu einem auf der Lenkstange (5) vorgesehenen, entsprechend geformten Loch zur Positionierung des Gehäuses (15) passt.

**Claims**

1. A control device for a rotary lawnmower which consists of a housing (1) which envelops the field of action of the blade and which conveys the cut grass through a discharge passage (2) to a collecting box or basket (3), of a driving engine (4) for the blade and of control members which in turn consist of a steering rod (5) for steering the lawnmower and of a control member (6) for the engine (4) or a driving device for the lawnmower, characterised in that the steering rod (5) is provided, in its lower portion, with a mounting and quick-action locking device (7) which consists of two winds (8) of profiled elements with a wedge-shaped cross-section which work on slide rails (9) the internal cross-section of which corresponds to the external cross-section of the wings (8), these slide rails being connected to the housing (1) and comprising, at their free end, an open slot which is directed upwards from the housing (1) to receive a shaft (11) of an eccentric locking member (10) and the quick-action locking device (7) rendering possible a rapid mounting and dismounting of the steering rod (5).

2. A device according to Claim 1, characterised in that the member (10) may advantageously be in the form of a shaft (11) which passes through the wings (8) and which is provided, at one end, with a lever or a rotatable handle (12) which comprises a dog (13) which, in the locking position, presses on one of the wings which corresponds to the steering rod (5), and the other end of the shaft (11) comprises a thread which is connected to a nut to regulate the locking force and at the same time ensures the locking of the opposite wing (8).

3

3. A device according to Claim 1, characterised in that the control members (6) of the engine (4) and/or of the driving device of the lawnmower are each mounted in a removable housing (15) which comprises securing rings (16) which hook on by resilient deformation, or clips and a pin (17) or another projecting member which, during the securing, fits into a correspondingly shaped hole provided in the steering rod (5) to position the housing (15).

**Revendications**

1. Dispositif de commande pour tondeuse à gazon à lame de coupe tournante autour d'un axe vertical, constituée par un carter (1) enveloppant le champ d'action de ladite lame de coupe et conduisant l'herbe coupée à travers un canal d'éjection (2) vers un réceptacle de ramassage ou panier (3), par un moteur (4) d'entraînement de la lame de coupe, et par des dispositifs de commande, sous forme d'un guidon (5) de manoeuvre de la tondeuse, et d'un organe (6) de commande du moteur (4) ou d'un dispositif d'entraînement de la tondeuse, caractérisé en ce que le guidon de manoeuvre (5) est pourvu a sa partie inférieure d'un dispositif (7) de montage et de blocage rapide, qui est constitué par deux ailes (8) en forme d'éléments profilés présentant une section conique, et ces ailes (8) coopèrent avec des glissières (9) dont la section intérieure correspond à la section extérieure des ailes (8), ces glissières (9) étant solidaires du carter (1), et présentant à son extrémité libre une fente ouverte dirigée du carter (1) vers le haut, pour réceptionner un axe (11) d'un organe de blocage à excentrique (10), les dispositifs (7) de montage et de blocage rapide permettant un montage et un démontage rapides du guidon de manoeuvre (5).

2. Dispositif, suivant la revendication 1, caractérisé en ce que l'organe (10) peut avantageusement se présenter sous forme d'un axe (11) traversant les ailes (8), et muni à une extrémité d'un levier ou d'une poignée (12) pivotante comportant une came (13) s'appuyant, en position de blocage sur l'une des ailes (8) correspondante du guidon (5), l'autre extrémité de l'axe (11) étant munie d'une partie filetée coopérant avec un écrou de réglage de l'intensité de l'effort de blocage assurant simultanément le serrage de l'aile opposée (8).

3. Dispositif, suivant la revendication 1, caractérisé en ce que les organes (6) de commande du moteur (4) et/ ou du dispositif d'entraînement de la tondeuse sont montés chacun dans un boîtier amovible (15) muni de bagues de fixation (16) à accrochage par déformation élastique, ou clips, et d'un tenon (17) ou autre appendice, coopérant avec un trou de forme correspondante prévu sur le guidon (5) pour le positionnement du boîtier (15) lors de sa fixation.

0 142 453

Fig.1

Fig.2

Fig. 3